# EUROPÄISCHE PATENTSCHRIFT

(11) **EP 2 129 749 B1**
(45) Veröffentlichungstag und Bekanntmachung des Hinweises auf die Patenterteilung: **22.11.2017**
(21) Anmeldenummer: 08734625.0
(22) Anmeldetag: 14.03.2008
(51) Int. Cl.: C10J 3/50, C10J 3/66

(54) **Vergasungsverfahren mit einem Reduktionsverfahren im stabilen Schwebebett**
Gasification process with a reduction process in a stable floating bed
Gazéification avec une réduction dans un lit flottant stable

(30) Priorität: 15.03.2007 DE 102007012452
(43) Veröffentlichungstag der Anmeldung: 09.12.2009
(73) Patentinhaber: SynCraft Engineering GmbH, 6130 Schwaz (AT)
(72) Erfinder: HUBER, Marcel, Bernard, A-6403 Flaurling (AT)
(74) Vertreter: Vossius & Partner Patentanwälte Rechtsanwälte mbB
(86) Internationale Anmeldenummer: PCT/EP2008/002085
(87) Internationale Veröffentlichungsnummer: WO 2008/110383

(56) Entgegenhaltungen:
- EP-A- 1 371 713
- EP-A- 1 749 872
- DE-A1- 19 928 581
- GB-A- 673 648
- US-A- 4 049 395
- US-A- 4 059 415
- US-A- 5 681 132
- US-A- 6 155 751
- US-A1- 2003 008 928
- US-B1- 6 455 011

## Beschreibung

Die Erfindung betrifft ein Verfahren zur thermochemischen Umwandlung von Biomasse bzw. kohlenstoffhaltigen Rohstoffen, insbesondere von Holzhackgut, in brennbares Gas, insbesondere Schwachgas bzw. Synthesegas. Ferner wird eine entsprechende Vorrichtung beschrieben.

Biomasse wird nach einer Trocknung, insbesondere zum Eliminieren eines eventuell vorhandenen Wasseranteils in der Biomasse, durch Pyrolyse in gasförmige und flüchtige Bestandteile zersetzt. Die Pyrolyse erfolgt insbesondere unter thermischer Einwirkung von vorzugsweise ca. 200°C bis 700°C. Um eine Verbrennung der Biomasse zu verhindern wird die Pyrolyse in einer entsprechenden Atmosphäre durchgeführt. Die Pyrolyse erfolgt vorzugsweise im Wesentlichen unter Ausschluss von Luft bzw. Sauerstoff. Endprodukte der thermochemischen Zersetzung sind insbesondere Gase wie CO, CO2, H2, CH4, flüchtige, ölige Bestandteile, Koks und/oder Wasserdampf.

Anschließend erfolgt eine Oxidation bzw. partielle Oxidation. Hierbei wird durch das Einbringen von Vergasungsmittel, wie zum Beispiel Luft, Wasserdampf, Kohlendioxid und/oder Sauerstoff, der bis zu diesem Prozessschritt feste und flüssige Anteil des Vollstroms, vorzugsweise des ungeteilten Materialstroms des Pyrolyseprodukts, ebenfalls zumindest teilweise in eine Gasform übergeführt. Der *partielle Oxidationsprozess* findet vorzugsweise in Temperaturbereichen von ca. 800° bis 2000°, vorzugsweise von ca. 1000° bis 1300°C statt, wobei derartige Temperaturen einen Teil der in der Pyrolyse gebildeten Stoffe, wie zum Beispiel Teere, zu zersetzen bzw. zu cracken vermag.

Dem schließt sich die Reduktion an. In der Reduktion reagieren insbesondere die durch die Oxidation entstandenen Stoffe. Es werden vorzugsweise die durch die Oxidation entstandenen anfänglich hohen Temperaturen, insbesondere aufgrund der Endothermie der ablaufenden Redoxreaktionen, reduziert.

Im Anschluss daran kann das produzierte Gas nach entsprechender Kühlung und möglichen Energierückgewinnungs- und Reinigungsstrecken zum Betrieb von Wärmekraftmaschinen o.ä. verwendet werden. Alternativ oder zusätzlich kann das produzierte Gas einem weiteren Veredelungsprozess, bspw. zur Biotreibstoffherstellung, zugeführt, oder bspw. in Brennstoffzellen verwertet werden

Basierend auf den ersten Entwicklungen in diesem Bereich erfolgte eine Vielzahl von Weiterentwicklungen, welche im Wesentlichen alle die Nutzbarmachung von Biomasse zum Ziel hatten. Im Folgenden werden bekannte Verfahren kurz diskutiert.

Die Wirbelschichtvergasung, wie beispielsweise in der DE-A-4 413 923 beschrieben, ist unter anderem dadurch gekennzeichnet, dass große Mengen an Rohstoff effizient umgesetzt werden können. Aufgrund einer dem Verfahren zugrundeliegenden schnellen Pyrolyse kommt es jedoch zu hohen Konzentrationen an Teeren im Produktgas. Eine aufwendige Gasreinigung wird dadurch notwendig, wodurch sich ein ökonomischer Betrieb selbst für große Anlagen äußerst schwierig gestaltet.

Das Verfahren der Festbettvergasung, ausgeführt durch einstufige Gleichstrom bzw. Gegenstromvergaser, wie beispielsweise in den Anmeldungen EP-A-1 203 802, DE-U-20 2004 011 213, DE-A-100 307 78 oder WO9426849 beschrieben, ist vor allem durch seine einfache Bauweise gekennzeichnet. Jedoch ist die Festbettvergasung hinsichtlich der Regelbarkeit, Anlagengröße, Gasreinheit und auch der Rohstoffflexibilität stark eingeschränkt. Zudem ergibt sich ein hohes Verschlackungsrisiko, selbst bei niedrigen Aschegehalten im Brennstoff, im Bereich der Festbettauflage, die beispielweise durch einen Gitterrost gebildet wird.

Bei der einstufigen Gegenstromvergasung, wie beispielsweise in den Anmeldungen WO-A-2005047436 und DE-A-33 46 105 beschrieben, kommt hinzu, dass ähnlich hohe Kondensatrückstände im Produktgas enthalten sind wie bei der Wirbelschichtvergasung. Weiterhin ist die Lufteinbringung in die Oxidationszone, insbesondere bei größeren Anlagen, schwierig zu gestalten.

Mehrstufige Vergasungskonzepte bedienen sich der Möglichkeit die einzelnen Prozessstufen der thermochemischen Umwandlung, d.h. der Trocknung, Pyrolyse, Oxidation und Reduktion, räumlich voneinander zu trennen. Die Ausführung der Pyrolyseeinheit ist dabei weniger entscheidend und erfolgt nach bewährten Verfahren, wie beispielsweise in der DE-A-31 26 049 beschrieben.

Wie in den Anmeldungen WO-A-0250214 und JP-A-2003253274 beschrieben, kann der Feststoffstrom nach der Pyrolyse getrennt vom Gasstrom verarbeitet werden. Dadurch entsteht die Möglichkeit, sehr reines Synthesegas aus der Feststofffraktion zu gewinnen. Die Pyrolysegasfraktion, insbesondere umfassend gasförmige Komponenten sowie die bei der Pyrolyse entstehende Teer- bzw. Kondensatfraktion, welche bis zu 80% des Inputmassenstroms, repräsentiert, kann dabei aber nur zum Teil effizient genutzt werden. Eine zusätzliche Verwertungseinheit für den zweiten Stoffstrom ist zudem notwendig. Verfahren, die die Stoffströme nach ihrer Aufspaltung wieder zusammenführen, wie bspw. in den Anmeldungen WO-A-9921940, WO-A-0168789 und WO-A-0006671 beschrieben, sind ebenfalls bekannt, jedoch sind aufwendige Manipulationseinheiten für diesen Verfahrensschritt notwendig. In beiden Fällen kommt es zu einer Verkomplizierung und wesentlichen Verteuerung der Kernkomponenten des Verfahrens.

Weiter ist ein Verfahren bekannt, bei dem der Vollstrom aus dem Pyrolyseprozess , inkl. fester, flüssiger und gasförmiger Anteile, partiell oxidiert wird, bevor er durch ein aus Pyrolysekoks bestehendes Festbett oder ähnliches dringt und dabei reduzierend auf das Bettmaterial wirkt. Die Anmeldungen DE-A-198 46 805, WO-A-0114502 und WO-A-0183645 beschreiben bspw. ein solches Vorgehen. Dieses Verfahren ermöglicht aufgrund der räumlich getrennten partiellen Oxidation hohe Gasqualitäten, bei gleichzeitiger hoher Rohstoffflexibilität, hoher Effizienz und relativ niedrigem Anlagenaufwand. Ein wesentlicher Problempunkt dieses Verfahrens liegt in der Leistungslimitierung durch den auftretenden Druckverlust im Festbett, wie in der Veröffentlichung "Pressure characterization of multi-staged fixed-bed gasification plants" von Huber M., Kreutner G., Berlin 2007 diskutiert, sodass die Realisierung von Anlagen im Bereich von über 1 MW Gasleistung nicht möglich erscheinen. Ebenso wie bei den einstufigen Festbettvergasern erschweren Verschlackungen im Festbettbereich zudem den sicheren Langzeitbetrieb dieses Verfahrens.

EP 1 749 872 und GB 673 648 beschreiben Verfahren zur Vergasung eines aus der Pyrolyse kommenden Vollstroms mit anschließender Reduktion der Vergasungsprodukte in einer senkrechten trompetenförmigen Reduktionseinheit. Die Reduktion findet in einer Wirbelschicht statt.

Die Aufgabe der Erfindung besteht darin, ein verbessertes Verfahren zur Vergasung von Biomasse bzw. kohlenstoffhaltigen Rohstoffen bereitzustellen. Diese Aufgabe wird durch die Merkmale der Patentansprüche gelöst. Die abhängigen Ansprüche betreffen bevorzugte Ausführungsformen der Erfindung.

Zusätzlich dienen die folgenden Aspekte dem Verständnis:
1. Vorrichtung zum zumindest partiellen Oxidieren eines festen, flüssigen und gasförmigen Material aufweisenden Vollstroms mit einem Materialeingang, einem Materialausgang und einem sich dazwischen erstreckenden Oxidationsbereich, wobei die Vorrichtung mindestens eine Einheit zum Einbringen von gasförmigem Mittel, insbesondere Vergasungs- bzw. Oxidationsmittel und/oder Transportmittel, aufweist, die so angeordnet und/oder ausgebildet ist, dass der Vollstrom pneumatisch vom Materialeingang durch den Oxidationsbereich zum Materialausgang transportiert wird. Vorzugsweise weist die Vorrichtung genau einen Materialeingang und/oder genau einen Materialausgang auf. Weiter bevorzugt wird der zumindest partiell oxidierte Vollstrom durch den genau einen Materialausgang hindurchgeführt.
2. Vorrichtung nach Aspekt 1, wobei der Vollstrom kontinuierlich transportiert wird.
3. Vorrichtung nach Aspekt 1 oder 2, wobei der Transport des Vollstroms zeitgleich mit der zumindest partiellen Oxidation des Materials.
4. Vorrichtung nach einem der Aspekte 1, 2, oder 3, wobei der Transport des Vollstroms und/oder die zumindest partielle Oxidation durch das Vergasungs- bzw. Oxidationsmittel bewirkt wird.
5. Vorrichtung nach einem der vorhergehenden Aspekte, wobei mindestens eine erste Düseneinheit zum Einbringen des Vergasungs- bzw. Oxidationsmittels in den Oxidationsbereich in der Nähe des Materialeingangs und/oder in der Nähe des Materialausgangs angeordnet ist, insbesondere um eine Durchmischung des Vergasungs- bzw. Oxidationsmittels und des Vollstroms zur erreichen und/oder den Transport des Vollstroms zu bewirken.
6. Vorrichtung nach einem der vorhergehenden Aspekte, wobei der Oxidationsbereich in der Nähe des Materialeingangs als Venturidüse gestaltet ist, so dass der Transport des Vollstroms nach dem Venturiprinzip erfolgt.
7. Vorrichtung nach einem der vorherigen Aspekte, mit strömungsbeeinflussenden Einbauten im Oxidationsbereich, die ausgebildet sind, eine Durchmischung des Vergasungs- bzw. Oxidationsmittels und des Vollstroms zu unterstützen.
8. Vorrichtung nach einem der vorhergehenden Aspekte, wobei der Transport des Vollstroms im Wesentlichen unabhängig von der Oxidation erfolgt und vorzugsweise im Wesentlichen allein durch eine geeignete Abstimmung zwischen Volumenstrom und Strömungsquerschnitt und der Einbringung eines zusätzlichen Stoffstromes, vorzugsweise des Vergasungsmittels, erfolgt.
9. Vorrichtung nach einem der vorhergehenden Aspekte, wobei das Einbringen des Vergasungsmittels an mindestens zwei verschiedenen Positionen, vorzugsweise entlang des Transportwegs und/oder entlang des Umfangs der Oxidationseinheit und/oder entlang des Umfangs im unteren Teil einer der Oxidationseinheit nachgeschalteten Reduktionseinheit, und vorzugsweise mittels Eindüsung, erfolgt.
10. Vorrichtung nach einem der vorhergehenden Aspekte, wobei Düsen, vorzugsweise Dralldüsen, insbesondere zum Einbringen bzw. zur Eindüsung eines Vergasungsmittels, am Ende der Oxidationseinheit und/oder im unteren Teil einer der Oxidationseinheit nachgeschalteten Reduktionseinheit angebracht sind, um die Strömung von festen, gasförmigen oder flüssigen Bestandteilen zu beeinflussen.
11. Vorrichtung nach einem der vorhergehenden Aspekte, wobei die zur Initialisierung einer Oxidation benötigte Zündtemperatur und/oder Zündenergie mittels einer Aufheizeinrichtung, insbesondere einer Zündvorrichtung bzw. Brennvorrichtung, an beliebiger Stelle entlang der Oxidationszone von außen zugeführt wird.
12. Vorrichtung nach einem der vorhergehenden Aspekte, wobei am Materialeingang thermisch, vorzugsweise durch Pyrolyse, zersetztes Material, vorzugsweise als Vollstrom aufweisend gasförmige, feste und flüssige Bestandteile, in die Oxidationseinheit eingebracht wird.
13. Vorrichtung nach einem der vorhergehenden Aspekte, wobei der Materialausgang der Oxidationseinheit mit einer Reduktionseinheit verbunden ist, sodass der zumindest partiell oxidierte Vollstrom, insbesondere direkt bzw. ungeteilt, in die Reduktionseinheit überführt wird, um Produktgas bzw. Synthese- oder Schwachgas zu erzeugen.
14. Vorrichtung nach Aspekt 13, wobei eine zumindest teilweise Rückführung des Produktgases bzw. Synthese- oder Schwachgases aus der Reduktionseinheit oder aus nachgeschalteten Anlagenteilen in ein der Oxidationseinheit vorgeschalteten Vorrichtungsteil erfolgt.
15. Vorrichtung nach einem der vorhergehenden Aspekte, wobei der Strömungsquerschnitt der Vorrichtung, insbesondere des Oxidationsbereichs, ausgehend vom Materialeingang hin zum Materialausgang konstant ist und/oder sich zumindest teilweise vergrößert und/oder verkleinert, insbesondere als Venturirohr ausgebildet ist.
16. Vorrichtung nach einem der vorhergehenden Aspekte, wobei die Vorrichtung einen, vorzugsweise etwa rohrförmigen, vor dem Materialeingang der Oxidationseinheit angeordneten Materialzuführungsabschnitt mit einem Strömungsquerschnitt aufweist, wobei dieser Strömungsquerschnitt größer ist als der Strömungsquerschnitt der Oxidationseinheit, insbesondere im Bereich des Materialeingangs der Oxidationseinheit.
17. Vorrichtung nach einem der vorhergehenden Aspekte, wobei die Vorrichtung eine Pyrolyseeinrichtung aufweist, die der Oxidationseinheit vorgeschaltet ist, und wobei die Vorrichtung derart ausgebildet ist, dass der dem Materialeingang der Oxidationseinheit zugeführte Vollstrom aus der Pyrolyseeinrichtung kommt.
18. Vorrichtung nach einem der vorhergehenden Aspekte, mit mindestens einer Stabilisierungseinheit, die ausgebildet ist, den Materialstrom zumindest in Kurven bzw. Biegungen in Verlaufsrichtung der Oxidationseinheit stabilisiert.
19. Vorrichtung nach einem der vorhergehenden Aspekte, wobei die Geschwindigkeit des Materialstroms durch das Einbringen des Vergasungsmittels des Materials regelbar bzw. steuerbar ist.
20. Vorrichtung nach einem der vorhergehenden Aspekte, wobei eine der Oxidationseinheit nachgeschaltete Reduktionseinheit mindestens eine Materialrückhalteeinrichtung für feste und/oder flüssige Materialbestandteile aufweist.
21. Vorrichtung nach einem der vorhergehenden Aspekte, mit einer Materialrückführungseinheit zum Zurückführen von festen und/oder flüssigen Materialbestandteilen von einer der Oxidationseinheit nachgeschalteten Reduktionseinheit in die Oxidationseinheit.
22. Vorrichtung nach Aspekt 21, wobei die Oxidationseinheit einen zweiten Materialeingang zum Einführen von von der Reduktionseinheit zurückgeführten Materialbestandteilen aufweist.
23. Vorrichtung nach einem der vorhergehenden Aspekte, mit einer Energierückführung zu einer Pyrolyseeinheit zum thermischen Zersetzen von Material.
24. Vorrichtung nach einem der vorhergehenden Aspekte, wobei das Material Biomasse, insbesondere kohlenstoffhaltige Rohstoffe, aufweist.
25. Vorrichtung nach einem der Aspekte 1 bis 24, wobei eine dem Oxidationsbereich nachgeschaltete Reduktionseinheit einen sich zur Materialausgangsöffnung der Oxidationsvorrichtung hin verjüngenden, vorzugsweise in etwa trompetenförmigen, Querschnitt aufweist.
26. Vorrichtung nach einem der vorhergehenden Aspekte, wobei eine dem Oxidationsbereich nachgeschaltete Reduktionseinheit im Wesentlichen stehend bzw. senkrecht angeordnet ist, so dass der Materialfluß durch die Reduktionseinheit im Wesentlichen senkrecht und vorzugsweise entgegen der Gravitationskraft erfolgt.
27. Vorrichtung nach einem der vorhergehenden Aspekte, wobei eine dem Oxidationsbereich nachgeschaltete Reduktionseinheit etwa trompetenförmig ausgebildet ist, so dass ein stabiles in Schwebe gehaltenes Bett, vorzugsweise ohne Verwendung von zusätzlichem Bettmaterial, in der Reduktionseinheit vorliegt und/oder die Strömungsgeschwindigkeit des Materialstroms über den Querschnitt der Reduktionseinheit im Wesentlichen konstant ist.
28. Vorrichtung nach einem der vorhergehenden Aspekte, wobei eine dem Oxidationsbereich nachgeschaltete Reduktionseinheit einen Überlauf für den Austrag von festen, flüssigen oder gasförmigen Stoffen aufweist.
29. Vorrichtung nach Aspekt 28, wobei der Überlauf um die Reduktionseinheit herum angebracht ist, und zumindest eine zum nach unten hin geführte Austragsleitung aufweist, wobei der Materialaustrag gravimetrisch erfolgt.
30. Vorrichtung nach Aspekt 28 und 29, wobei der Überlauf ein mechanisches Austragssystem aufweist.
31. Vorrichtung zum Oxidieren eines Materials, insbesondere nach einem der Aspekte 1 bis 30, mit einem Materialeingang, einem Materialausgang, einem sich dazwischen erstreckenden Oxidationsbereich und einer Reduktionseinheit, wobei die Vorrichtung mindestens eine Einheit zum Einbringen von Vergasungsmittel aufweist, die so angeordnet und/oder ausgebildet ist, dass das Material durch das eingebrachte Vergasungsmittel pneumatisch vom Materialeingang durch die Oxidationseinheit zum Materialausgang und durch diesen hindurch transportiert wird, und der Materialausgang mit der Reduktionseinheit so verbunden ist, dass aus dem Materialausgang austretendes Material in die Reduktionseinheit gelangt.
32. System zur thermochemischen Umwandlung von Brennstoffmaterial, insbesondere Biomasse bzw. kohlenstoffhaltigen Rohstoffen, wie bspw. Holzhackgut, in brennbares Gas, insbesondere aufweisend eine Vorrichtung nach einem der Aspekte 1 bis 31, mit:
   (i) einer Pyrolyseeinheit zum thermischen Zersetzen des Brennstoffmaterials, insbesondere in einen festes, flüssiges und gasförmiges Material aufweisenden Vollstrom;
   (ii) einer der Pyrolyseeinheit nachgeschalteten Oxidationseinheit zum Oxidieren des Vollstroms, insbesondere nach einem der Aspekte 1 bis 31, und
   (iii) einer der Oxidationseinheit nachgeschalteten Reduktionseinheit,
   wobei das System so ausgebildet ist, dass der Vollstrom aus der Oxidationseinheit in die Reduktionseinheit gelangt, um das brennbare Gas zu erzeugen.
33. Reduktionseinheit zum Reduzieren eines aus einer Oxidationseinheit austretenden Materialstroms, insbesondere eines aus einer Oxidationseinheit nach einem der Aspekte 1 bis 30 austretenden Vollstroms, wobei die Innenwände der Reduktionseinheit im wesentlichen trompetenförmig sind, so dass ein im wesentlichen in Schwebe gehaltenes Bett ausgebildet wird.
34. Verfahren zum Oxidieren eines Materials mittels einer Oxidationsvorrichtung, insbesondere nach einem der Aspekte 1 bis 31 bzw. einem System nach Aspekt 32, mit den Schritten: Einbringen eines festes, flüssiges und gasförmiges Material aufweisenden Vollstroms in den Materialeingang der Oxidationsvorrichtung, einbringen eines gasförmigen Transportmittels und/oder eines Vergasungs- bzw. Oxidationsmittels zur zummindest partiellen Oxidation des Materials, derart, dass der Vollstrom von einem Materialeingang durch die Oxidationseinheit pneumatisch zu einem Materialausgang der Oxidationseinheit transportiert wird.
35. Verfahren nach Aspekt 34, mit dem Schritt des thermischen Zersetzens des Materials in einer Pyrolyseeinheit vor dem Einbringen des Vergasungsmittels.
36. Verfahren nach einem der Aspekte 34 oder 35, wobei das Material in der Oxidationsvorrichtung im Wesentlichen ohne externe Energiezuführung oxidiert wird.
37. Verfahren nach einem der Aspekte 34 bis 36, mit dem Schritt des Regelns bzw. Steuerns der Geschwindigkeit des Materialstroms in der Oxidationseinheit durch das kontrollierte Einbringen des Transport- bzw. Vergasungsmittels.
38. Verfahren nach einem der Aspekte 34 bis 37, mit dem Schritt der Reduktion des oxidierten Materials in einer Reduktionseinheit zur zumindest teilweisen Vergasung von festen und/oder flüssigen Bestandteilen.
39. Verfahren nach einem der Aspekte 34 bis 38, wobei der ungeteilte Vollstrom in und durch die Oxidationseinheit, vorzugsweise durch die Oxidationseinheit in die Reduktionseinheit transportiert, vorzugsweise pneumatisch transportiert, wird.

Ein mehrstufiger Vergaser, insbesondere ein Vollstromvergaser, weist vorzugsweise Einzelkomponenten mit einer einfachen, wartungsarmen und verschlackungssicheren Bauweise auf. Ferner ist er vorzugsweise nicht auf Anlagengrößen unter 1 MW Gasleistung beschränkt und insbesondere nicht in Bezug auf Größe oder Leistung limitiert sondern beliebig upscalebar. Das erzeugte brennbare Gas, das im Folgenden auch als Produktgas, Schwachgas bzw. Synthesegas bezeichnet wird, ist vorzugsweise ohne aufwendige Gasreinigung für eine nachfolgende Gasverwertung verwendbar. Schwachgase sind insbesondere Gasgemische mit reduziertem Heizwert, bspw. unter 8,5 MJ/Nm². Vorzugsweise können durch das mehrstufige Verfahren auch Rohstoffe verschiedener Größe effizient in Synthesegas verarbeitet werden.

Die Erfindung geht von dem Grundgedanken aus, einen aus der Pyrolyse erhaltenen Vollstrom, also insbesondere den ungeteilten Materialstrom mit festen, flüssigen und gasförmigen Anteilen, durch die Einbringung eines Vergasungs- bzw. Oxidationsmittels in einer Oxidationseinheit zumindest partiell zu oxidieren. Hierbei wird, insbesondere durch die mit der Oxidation einhergehende Volumenexpansion des Vollstroms und/oder den Druck und/oder die Geschwindigkeit des eingebrachten Vergasungsmittels, vorzugsweise neben gasförmigem auch flüssiges und festes Material und insbesondere der Vollstrom, insbesondere der ungeteilte Vollstrom, vorzugsweise ausgehend von einer Materialeingangsöffnung in Richtung einer Materialausgangsöffnung der Oxidationseinheit und vorzugsweise durch diese hindurch transportiert. Vorzugsweise wird der Vollstrom ausgehend von einer Pyrolyseeinheit über die Oxidationseinheit in Richtung einer Reduktionseinheit transportiert. Der Transport bzw. der beschriebene pneumatische Transport erfolgt vorzugsweise entlang einer Achse, die sich zwischen dem Materialeingang und dem Materialausgang erstreckt. Diese Achse wird vorzugsweise durch die Oxidationseinheit bzw. deren Innenwände definiert. Der Transport erfolgt vorzugsweise im Wesentlichen kontinuierlich. Der Transport des Stroms erfolgt somit entlang der Oxidationsstrecke und im Wesentlichen gleichzeitig mit der Oxidation, vorzugsweise durch das Oxidations- bzw. Vergasungsmittel. Der Transport des Materials erfolgt weiterhin vorzugsweise unabhängig von der Reaktion und vorzugsweise durch eine Strömungsquerschnittsverengung beim Übergang von der Pyrolyseeinheit in die Oxidationseinheit sowie alternativ oder zusätzlich durch die Einbringung eines zusätzlichen Stoffstromes, vorzugsweise durch das Einbringen von Vergasungsmittel. Das Einbringen von Vergasungsmittel erfolgt vorzugsweise mit einem Druck über dem in der Pyrolyse oder Oxidationseinheit herrschenden Druck und mit einer Geschwindigkeit größer 0 m/s. Als Vergasungsmittel werden vorzugsweise Gase wie beispielsweise Luft, Wasserdampf, Kohlendioxid und/oder Sauerstoff verwendet. Vorzugsweise kann zumindest teilweise in Motorabgasen enthaltenes CO₂ als Vergasungsmittel verwendet werden. Das eingebrachte Transportmittel wirkt vorzugsweise oxidierend, reduzierend und/oder inert auf den Vollstrom.

Die Pyrolyseeinheit weist hierbei vorzugsweise einen Strömungsquerschnitt auf, der durch den Volumenstrom des Vollstroms durchströmt wird, der größer als der oder gleich dem Strömungsquerschnitt der Oxidationseinheit ist. Die Einbringung des Vollstroms aus der Pyrolyseeinheit in die Oxidationseinheit erfolgt vorzugsweise, bezogen auf das Gravitationsfeld, im wesentlichen von oben.

Vorzugsweise sind in bzw. an der Oxidationseinheit mehrere Düseneinheiten zur Einbringung von Vergasungsmittel angeordnet. Derartige Einheiten zur Einbringung von Vergasungsmittel sind vorzugsweise entlang des Transportwegs bzw. der Länge der Oxidationseinheit und/oder entlang des Querschnitts des Transportwegs bzw. der Oxidationseinheit angeordnet. Eine Durchmischung des durch die Düseneinheiten eingebrachten Vergasungsmittels und dem Vollstrom aus der Pyrolyse kann mittels strömungstechnischen Einbauten verbessert werden, vorzugsweise aber durch eine spezielle Anordnung bzw. Ausbildung einer oder mehrerer Düseneinheiten, erfolgen.

So ist es vorteilhaft, das Vergasungsmittel mittels einer oder mehrerer Einspritzdüsen bzw. Dralldüsen in die Oxidationseinheit zuzuführen. Insbesondere bewirkt das Zuführen mittels Dralldüse, dass innerhalb des Oxidationsbereichs turbulente Strömungen auftreten die eine Durchmischung des Vergasungsmittels mit dem Vollstrom verbessern. Zusätzlich oder alternativ können auch andere strömungstechnische Einbauten, beispielsweise Hindernisse, Änderungen des Querschnitts der Oxidationseinheit (Form und/oder Größe der Querschnittsfläche) eine Durchmischung des Vergasungsmittels mit dem Vollstrom verbessern.

Insbesondere kann die Oxidationseinheit gemäß dem Venturiprinzip ausgebildet sein, vorzugsweise als Venturi-Düse oder Venturi-Rohr. Beispielsweise kann ein Rohrstück mit einer Verengung des Querschnitts durch zwei gegeneinander gerichtete Konii, die an der Stelle ihres geringsten Durchmessers vereint sind bzw. ineinander übergehen, gebildet werden.

Vorzugsweise wird, insbesondere beim Auftreten von größeren Korngrößen der sich im aus der Pyrolyseeinheit kommenden Strom befindenden Feststoffe, an mehreren Positionen entlang der Transportstrecke, also entlang der sich zwischen Materialeingang und Materialausgang erstreckenden mindesten einen Achse, der Oxidationseinheit und/oder entlang ihres Umfangs Vergasungsmittel in die Oxidationseinheit eingebracht. Gemäß einer bevorzugten Ausführungsform weist die Achse mindestens einen, vorzugsweise 2, 3 oder mehr Achsenabschnitte auf, die winklig zueinander ausgerichtet sind. Besonders bevorzugt wird die Geschwindigkeit des Vollstroms in der bzw. aus der Oxidationseinheit so gesteuert bzw. geregelt, dass sie im Wesentlichen konstant ist und dass der pneumatische Transport des Vollstroms gewährleistet ist.

Der pneumatische Transport erfolgt vorzugsweise durch das Einbringen eines Oxidationsmittels. D.h., das Oxidationsmittel erfüllt zwei Aufgaben, nämlich die Oxidation und den Transport des Vollstroms. Der vorteilhafte pneumatische Transport kann jedoch auch durch ein anderes Gas erreicht werden, d.h. durch ein Gas das nicht als Oxidationsmittel dient. So wird weiterhin bevorzugt beispielsweise ein Gas, das nicht als Oxidationsmittel geeignet ist derart eingebracht, dass der Vollstrom durch dieses pneumatisch transportiert wird. Die Zugabe von Oxidationsmittel erfolgt hierbei vorzugsweise in einer geringeren Menge, da das Oxidationsmittel neben der Oxidation nicht oder nur partiell bzw. geringfügig für den pneumatischen Transport verwendet wird.

Gemäß einer bevorzugten Ausführungsform weist die Vorrichtung eine (erste) Düseneinheit am Eingang, also im Bereich des Materialeingangs, der Oxidationsstrecke und/oder eine (zweite) Düseneinheit am Ausgang, also im Bereich des Materialausgangs, der Oxidationsstrecke auf.

Vorzugsweise dient eine erste Düseneinheit, vorzugsweise am Eingang der Oxidationsstrecke bzw. -einheit angeordnet, dem Einbringen eines Vergasungs- bzw. Oxidationsmittels zum Transport, insbesondere zum pneumatischen Transport, des Materialtroms. Vorzugsweise dient das über die erste Düseneinheit eingebrachte Vergasungs- bzw. Oxidationsmittel ferner der Oxidation der entsprechenden Materialstromanteile, insbesondere des Vollstroms. Das Vorsehen einer (zweiten) Düseneinheit am Ende der Oxidationstrecke oder im unteren, also dem der Oxidationseinheit zugewandten, Teil der Reduktionseinheit erweist sich insbesondere zum Verhindern bzw. Verringern eines Druckverlusts entlang der Oxidationsstrecke und/oder zur Leistungsregelung als vorteilhaft. Vorzugsweise wird insbesondere über die erste Düseneinheit im Wesentlichen der Transport bzw. der pneumatische Transport, sichergestellt. Das optionale Vorsehen mindestens einer zweiten Düseneinheit, bspw. im Bereich des Materialausgangs, dient insbesondere der Leistungsregelung, insbesondere bei Verwendung weiterer oder anderer Brennstoffe bzw. dient der Stabilisierung des Schwebebettes. Das Material wird vorzugsweise kontinuierlich, insbesondere entlang der Oxidationseinheit, transportiert. Insbesondere bedingt die Vorrichtung eine Zwangsführung bzw. einen definierten Transport des Materials bzw. des Vollstroms. Hierbei erfolgt vorzugsweise eine optimale Durchmischung des Vollstroms, insbesondere durch die beschriebene Anordnung der Düseneinheiten.

Die zweite Düseneinheit, die mehrere Düsen umfassen kann, ist vorzugsweise so angeordnet, dass die Strömungsrichtung der Düse(n) im wesentlichen der Strömungsrichtung des Materialstroms entspricht. Vorzugsweise sind mehrere Düsen symmetrisch um den Materialstrom, also um die Achse des Vollstromtransports, herum angeordnet. Gemäß anderen bevorzugten Ausführungsformen kann zwischen der Strömungsrichtung der Düsen und dem Materialstrom, also entlang der Transportachse, ein spitzer bis zu einem rechten Winkel, d.h. 0 ≤ α ≤ 90° vorliegen. Zusätzlich oder alternativ können die Düsen oder ein Teil der Düsen derart ausgerichtet werden, dass entlang des Materialtransports bzw. der Transportachse eine Verwirbelung stattfindet. Beispielsweise kann die Strömungsrichtung der Düsen so ausgerichtet sein, dass eine tangentiale Komponente einen Drall bzw. eine radiale Verwirbelung senkrecht zur Strömungsrichtung des Materialstroms bewirkt.

Erfindungsgemäß erfolgt die Oxidation mindestens einstufig. Gemäß bevorzugten Ausführungsformen erfolgt die Oxidation zwei- oder mehrstufig. Die Vorrichtung und/oder das erfindungsgemäße Verfahren sind hierzu entsprechend anzupassen, wie es dem Fachmann geläufig ist. Beispielsweise durch das Vorsehen mehrerer in Linie und/oder parallel geschalteter Vorrichtungen oder einer Vorrichtung mit mehreren Oxidationsbereichen.

Vorzugsweise erfolgt die Oxidation beim ersten Start bzw. Anfahren der Vorrichtung von selbst, wobei für die Selbstzündung insbesondere das Vorliegen einer bestimmten Temperatur erforderlich ist. Alternativ oder zusätzlich kann die Zündung durch einbringen eines Zündfunkens oder dgl. erfolgen bzw. unterstützt werden. Abhängig von der Zusammensetzung des Vollstroms und des Oxidationsmittels und deren Verhältnisse kann eine Initialzündung bzw. Startzündung, d.h. eine kurze Energiezufuhr beim Starten der Oxidation für eine nachfolgende kontinuierliche Oxidation ausreichend sein. Es kann jedoch auch bevorzugt sein, dass die kontinuierliche Oxidation nur unter der kontinuierlichen Zuführung von externer Energie abläuft.

Vorzugsweise weist die Oxidationseinrichtung daher eine Einrichtung zum Einbringen der benötigten Energie auf, die im Folgenden auch als Aufheizeinrichtung, Zündvorrichtung bzw. Brennvorrichtung bezeichnet wird. Beispiele für eine Aufheizeinrichtung sind eine Heißluftdüse, ein Gasbrenner, Heizstrahler, Glüh- bzw. Zündkerzen, Zündstifte, usw. Abhängig von dem verwendeten Rohstoff bzw. von der Zusammensetzung des Vollstroms der der Oxidationseinrichtung zugeführt wird, kann die Aufheizeinrichtung, wie bereits beschrieben, lediglich als Anzündhilfe, d.h. kurzzeitig beim Anfahren der Oxidationseinrichtung verwendet werden oder kontinuierlich Energie zuführen, um den Oxidationsprozess aufrechtzuerhalten. Zudem kann die Aufheizeinrichtung auch nach Bedarf jederzeit zur Energiezufuhr eingesetzt werden, beispielsweise wenn sich die Rohstoffzusammensetzung und/oder die Gaszusammensetzung während des laufenden Betriebs ändert.

Insbesondere kann eine Aufheizeinrichtung als Brennerdüse ausgebildet sein, die gleichzeitig einerseits als Brenner und/oder andererseits als Düse zum Zuführen des Oxidationsmittels ausgebildet ist. Beispielsweise dient ein durch die Brennerdüse zugeführtes brennbares Gasgemisch, beispielsweise enthaltend CH₄+O₂, als Brenngas zur Aufheizung. Wenn der Oxidationsvorgang, bspw. nach anfänglicher Zündung, ohne die zusätzliche Zufuhr von Energie stattfindet, kann beispielsweise nur noch ein Oxidationsmittel, beispielsweise enthaltend O₂, durch die Brennerdüse in die Oxidationsvorrichtung eingebracht werden. Alternativ, werden vorzugsweise beide Funktionen zeitgleich durch die Brennerdüse erfüllt.

Gemäß einer bevorzugten Ausführungsform erfolgt zur Startzündung der Oxidation eine Auffettung des Gemisches, bspw. durch Einbringen von bspw. Propan, Methan, oder Synthesegas/Schwachgas das über eine Rezirkulationsleitung aus der Reduktionseinheit oder nachgeschalteten Gasreinigungseinheiten, vorzugsweise aber aus der ersten Reinigungsstufe, rückgeführt werden kann.

An einer Ausgangsöffnung der Oxidationseinheit ist eine Reduktionseinheit so angeordnet, dass das aus der Oxidationseinheit austretende Material, also vorzugsweise der Vollstrom, vorzugsweise direkt, in die Reduktionseinheit gelangt. Besonders bevorzugt reduzieren das zuvor oxidierte bzw. die Oxidationseinheit verlassende Material bzw. die Produkte der Oxidationseinheit in der Reduktionseinheit, insbesondere in einer Reduktionszone. In der Reduktionseinheit laufen vorzugsweise Redoxreaktionen u.a. zwischen Gas- und Feststoff ab.

Die Reduktionseinheit weist einen sich zur Ausgangsöffnung der Oxidationseinheit hin verjüngenden Querschnitt auf. Der Querschnitt ist derart, dass das zu reduzierende Material und insbesondere das im Materialstrom vorhandene feste und/oder flüssige Material im Wesentlichen in der Schwebe gehalten und reduziert wird. Die Reduktionseinheit, und insbesondere der Querschnitt bzw. Strömungsquerschnitt der Reduktionseinheit, sind derart ausgebildet, dass sich ein stabiles in Schwebe gehaltenes Bett ausbildet. Das Bett bzw. Schwebebett umfasst hierbei insbesondere die im Material- bzw. Vollstrom enthaltenen Festkörper bzw. -teilchen. Das im Materialstrom bzw. Vollstrom enthaltene Gas bzw. der gasförmige Anteil strömt vorzugsweise entlang der Reduktionseinheit, wobei das Feststoffbett in Schwebe und stabil ist. Alternativ oder zusätzlich ist die Reduktionseinheit derart ausgebildet, dass über den Querschnitt der Reduktionseinheit eine im Wesentlichen gleichmäßige Materialströmung bzw. Materialströmungsgeschwindigkeit, vorzugsweise nur des gasförmigen Anteils erreicht wird.

Vorzugsweise weist der Strömungsquerschnitt der Reduktionseinheit, insbesondere um die obigen Merkmale zu ermöglichen, zumindest teilweise eine sich in Richtung Materialausgang erweiternde Trompetenform, insbesondere eine sich in Strömungsrichtung trompetenförmig öffnende Innenfläche, auf. Der Vorteil einer solchen trompetenförmigen, sich öffnenden Ausgangsmündung liegt darin, dass insbesondere schwer zu kontrollierende Ablösezonen an deren Innenfläche vermieden werden, die beispielsweise zu Wirbeln führen, wodurch die Stabilität und/oder die Schwebe des Betts negativ beeinflusst werden könnten. Mit einer solchen speziell geformten Form bzw. einem solchen Strömungsquerschnitt wird insbesondere sichergestellt, dass die Strömung des gasförmigen Mediums im Wesentlichen glatt und ablösefrei über die Innenfläche geführt wird. Die Reduktionseinheit bzw. deren trompetenförmiger Abschnitt weist vorzugsweise einen eine Ausgangsöffnung aufweisenden dach- bzw. deckelförmigen Abschnitt auf.

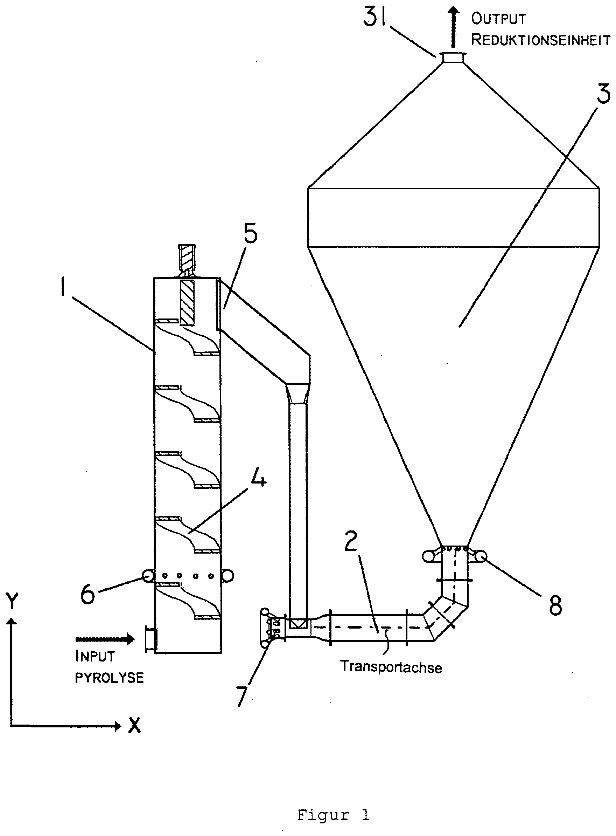

Es sei bemerkt, dass mit dem Begriff "trompetenförmig" verschiedene, nicht unbedingt nur kreisförmige Öffnungen umfasst sind. Insbesondere bezieht sich der Begriff "trompetenförmig" auf rotationssymmetrische Kegelformen die eine ähnliche Form aufweisen wie der Trichter einer Trompete. Entscheidend ist insbesondere, dass sich der Strömungsquerschnitt insgesamt zum Ausgang der Mündungskante hin ständig vergrößert, wobei eine "lineare" Vergrößerung in Form einer kegelstumpfartigen Ausgangsmündung noch nicht unbedingt den gewünschten Erfolg bringt. Eine lineare Vergrößerung kann beispielsweise mittels einer linearen Funktion beschrieben werden: y=ax±b, wobei diese Funktion lediglich den Verlauf einer Seiteninnenwand in einem Schnitt durch den vorzugsweise im Wesentlichen rotationssymmetrischen Körper darstellt und der Ursprung des Koordinatensystems an das Eingangsende bzw. untere Ende (vgl. Darstellung 3 in Fig. 1) der Reduktionseinheit und somit der Trompetenform gelegt ist, und wobei die y-Achse in die Richtung des Transportverlaufs, vorzugsweise die vertikale Richtung nach oben, verläuft (Höhe der Reduktionseinheit) und die x-Achse horizontal verläuft und somit die Größe des Radius bzw. des Durchmessers der Reduktionseinheit an einer bestimmten Position y beschreibt. Besonders vorteilhaft sind Aufweitungen, bei denen die Steigung der Innenwände entlang des Transportweges vom Eingangsende zum Ausgangsende kontinuierlich und/oder diskontinuierlich verändert. Bspw. ist die Steigung der Innenwände am unteren bzw. Eingangsende verschieden von der Steigung der Innenwände am oberen bzw. Ausgangsende der Reduktionseinheit (d.h. die Steigung ist nicht konstant, wie bspw. bei einer linearen Funktion). Insbesondere sind trompetenförmige Innenflächen vorteilhaft, die am Eingangsende der Reduktionseinheit eine größere Steigung (beispielsweise gemäß der beschriebenen Ausrichtung annähernd vertikal) haben und am Ausgangsende der Reduktionseinehehit eine geringere Steigung aufweisen (beispielsweise annähernd horizontal).

Zudem kann es vorteilhaft sein, wenn sich die Steigung der Innenfläche zwischen den Enden, vorzugsweise dem unteren Ende und dem oberen Ende, vorzugsweise kontinuierlich, beispielsweise von unten nach oben wird die Steigung der Innenflächen immer flacher. Mathematisch können derartige Verläufe beispielsweise durch eine a/x (y=a/x) Funktion oder eine ay³ (x=ay³) Funktion beschrieben werden, wobei bei diesen beiden beispielhaften Funktionen der Koordinatenursprung an das obere Ende bzw. hintere Ende der Reduktionseinheit zu legen ist. In Fig. 1 sind die Achsen x und y beispielhaft zu sehen.

Insbesondere ist jede Funktion denkbar, die die Innenflächenform innerhalb der Grenzen der linearen Funktion und der a/x beschreibt. Mit anderen Worten, die Steigung der Innenflächen soll von unten (Eingang) nach oben (Ausgang) geringer (flacher) werden, jedoch vorzugsweise nicht allzu sehr. Eine kontinuierliche Verringerung der Steigung der Innenfläche (von unten nach oben) hat den Vorteil, dass die Innenfläche im Verlauf nach oben immer mehr "Stützfläche" für das Schwebebett bietet, das einerseits von dem Gasstrom eine Kraft nach oben erfährt und andererseits durch die Gravitation eine Kraft nach unten erfährt. Durch die Formgebung der Innenfläche kann somit in Kombination mit der vertikalen Strömungsgeschwindigkeit die Lage und/oder die Höhe bzw. Dicke des Schwebebetts beeinflusst bzw. definiert werden.

Zudem hat sich herausgestellt, dass unterschiedliche Formen bzw. Querschnittsverläufe der Reduktionseinheit für unterschiedliche Rohstoffe besonders vorteilhaft sind, sodass die Form der Innenflächen vorzugsweise an die gegebenen Rohstoffe und Strömungsgeschwindigkeiten angepasst wird. Zudem kann am oberen Ende der Reduktionseinheit, d.h. nach der trompetenförmigen Aufweitung, ein zylinderförmiger Aufsatz angebracht werden.

Die obigen Merkmale werden vorzugsweise durch eine Abstimmung des sich in Stromrichtung erweiternden Querschnitts der Reduktionseinheit mit der Expansion bspw. des Volumen- bzw. Gasstroms bewirkt. Vorzugsweise erweitert sich der Querschnitt der Reduktionseinheit in Strömungsrichtung etwa trompetenförmig. Dadurch werden vorzugsweise in der Reduktionszone Verwirbelungen im Wesentlichen vermieden. Vorteilhafterweise erlaubt die erfindungsgemäße Ausgestaltung insbesondere eine gleichmäßige Geschwindigkeitsreduktion ohne Verwirbelungen und damit vorzugsweise ein schwebendes, gleichmäßiges und dichtes Bett.

Ebenso bewirkt eine solche Bauweise die vermehrte Abstützung des Bettmaterials auf der Außenwand und verringert dadurch den Druckverlust.

In der Reduktionseinheit werden vorzugsweise feste bzw. flüssige Stoffe bis zu einer bestimmten Materialkorngröße mittels eines, vorzugsweise mechanischen, Rückhaltesystems zurückgehalten, um eine bestimmte Gasreinheit am Ausgang der Reduktionseinheit zu erzielen. Das Rückhaltesystem ist optional und vorzugsweise als Massenkraftrückhaltesystem ausgebildet.

Zur Niveauregulierung in der Reduktionseinheit kann diese mit einem, vorzugsweise gravimetrischen, Austragssystem bzw. Überlauf zur Entfernung von Festsoffen, insbesondere Asche und Fremdstoffen, aus der Reduktionseinheit ausgestattet sein. Das Austragssystem ist vorzugsweise ringförmig, zumindest stellenweise, um die Reduktionseinheit angeordnet. Das Austragssystem kann an jeder Stelle entlang der Reduktionszone, jedoch vorzugsweise am Ende der Aufweitung des vorzugsweise trompetenförmigen Querschnitts der Reduktionszone, angebracht sein. Die ausgetragenen Feststoffe können so in das System rückgeführt oder separat aus dem System entfernt werden.

Die Erfindung ermöglicht eine wesentliche Vereinfachung der Vergasungseinheit im Vergleich zu herkömmlichen Festbett- aber auch Teilstromvergasern. Durch den insbesondere pneumatischen Transport des Pyrolysegutes zur Reduktionseinheit bei gleichzeitiger partieller Oxidation wird eine Reduktion der Teere aus der Pyrolyse, die Bereitstellung der notwendigen Energie zur nachfolgenden Reduktion, ein vollständiger Weitertransport aller Produkte aus der Pyrolyse und der Rückhaltung nicht vergaster Komponenten durch Massenkraftrückhaltesysteme ermöglicht. Ein auf den Vollstrom reduzierend wirkendes Vergasungsbett, ohne den nachteiligen Druckverlust eines Festbettes bei gleichzeitiger Effizienz und Verschlackungssicherheit wird somit ermöglicht. Mechanische Einbauten wie Roste und/oder ähnliches und/oder zusätzliches Bettmaterial, wie Quarzsand und/oder ähnliches sind nicht mehr zwingend erforderlich. Ebenfalls fallen notwendige Manipulationseinheiten zur Stoffstromtrennung nach der Pyrolyse weg. Der Hochtemperaturbereich (Oxidationszone) wird stark eingeschränkt; eine einfache Bauweise verringert zudem Gestehungs- und Wartungskosten. Das Verfahren sowie die Vorrichtung erlauben insbesondere eine einfache technische Realisierung der Vergasungshauptkomponenten, eine hohe Gasqualität bereits vor der Gasreinigung, eine hohe Verschlackungssicherheit und/oder eine hohe Effizienz.

Im Folgenden werden bevorzugte Ausführungsformen der vorliegenden Erfindung mit Bezug auf die Figuren beschrieben; es zeigen:
- Figur 1: eine Ausführungsform eines mehrstufigen Vollstromvergasers;
- Figur 2: eine Ausführungsform eines mehrstufigen Vollstromvergasers mit einer Feststoffrückführung;
- Figur 3: eine Ausführungsform eines mehrstufigen Vollstromvergasers mit einer Reduktionseinheit, die ein Feststoffrückhaltesystem aufweist;
- Figur 4: eine Ausführungsform eines mehrstufigen Vollstromvergasers mit einer Oxidationseinheit, die Strömungsstabilisatoren aufweist;
- Figur 5: eine Ausführungsform eines mehrstufigen Vollstromvergasers mit einer Reduktionseinheit die ein Feststoffaustragssystem aufweist;
- Figur 6: eine Draufsicht einer Austragseinheit zum Entfernen von unerwünschten Materialen aus der Reduktionseinheit; und
- Figur 7: ein Flussdiagramm eines erfindungsgemäßen Verfahrens.

Figur 1 zeigt eine bevorzugte Ausführungsform eines mehrstufigen Vollstromvergasers. Zu vergasendes Material, wie Biomasse bzw. kohlenstoffhaltige Rohstoffe, wird einer Pyrolyseeinheit 1 zugeführt. Dies erfolgt vorzugsweise mittels eines achsenlosen Spiralfördersystems. Die Pyrolyseeinheit ist vorzugsweise stehend bzw. senkrecht angeordnet und weist eine im Wesentlichen vertikale Steigschnecke 4 auf. Das Pyrolysegut bzw. zu vergasende Material wird über eine vorzugsweise achslose, im Wesentlichen vertikal angeordnete Schnecke 4 zu einem Auswurf 5 befördert. Vorzugsweise erfolgt die Pyrolyse als allo- bzw. autotherme Verschwelung, also mit bzw. ohne äußere Energiezufuhr.

Vorzugsweise erfolgt die Einbringung von Wärme in die Pyrolyseeinheit 1 mittels heißen Gasen. Vorzugsweise werden heiße Gase mittels mindestens einer Gasdüse 6 in die Pyrolyseeinheit 1 eingebracht. Derartige Gase wirken vorzugsweise reduzierend, oxidierend und/oder inert auf das Material bzw. Aufgabegut.

Anstatt der Eindüsung von heißen Gasen erfolgt bei der autothermen Pyrolyse eine Einbringung einer definierten Menge von Oxidationsmittel, vorzugsweise Luft bzw. Sauerstoff. Bei einem gewissen Anteil des zu pyrolysierenden Gutes erfolgt somit eine Verbrennungsreaktion aus welcher die nötige Wärme für die Pyrolyse des Restmaterials bezogen wird.

Die in die Pyrolyseeinheit 1 eingebrachte Wärme kann also extern erzeugt oder von einem anderen Prozessschritt des Vollstromvergasers zurückgeführt werden. In der Pyrolyseeinheit 1 wird eine auto- bzw. allotherme Verschwelung des zu vergasenden Materials sichergestellt. D.h. eine Verbrennung wird vorzugsweise durch eine entsprechende Atmosphäre verhindert.

Die hier beschriebene Pyrolyseeinheit 1 stellt eine vorteilhafte und bevorzugte Ausführungsform dar, die zum besseren Verständnis der Erfindung gezeigt wird. Sie kann durch andere bekannte Pyrolyseeinheiten bzw. Verfahren ersetzt werden.

Vorzugsweise wird die Rohstoff bzw. Biomasse in die Pyrolyseeinheit eingebracht. Ein in der Pyrolyseeinheit 1 erzeugter Materialstrom, insbesondere ein feste, flüssige und gasförmige Bestandteile aufweisender Vollstrom verlässt die Pyrolyseeinheit und wird der Oxidationseinheit 2 vorzugsweise ungeteilt zugeführt.

Das Material, das die Pyrolyseeinheit durchlaufen hat, gelangt über einen Auslass 5 zu einer Oxidationseinheit 2. In der gezeigten bevorzugten Ausführungsform gelangt das pyrolysierte Gut gravimetrisch im Vollstrom zusammen mit dem Verschwelgas in die Oxidationseinheit 2. Vorzugsweise fällt das aus der Pyrolyseeinheit kommende Material über den Auslass 5 zur Oxidationseinheit 2, ohne weitere Maßnahmen. Durch optionale Maßnahmen kann der Materialfluss zwischen der Pyrolyseeinheit 1 und der Oxidationseinheit 2 sowie durch die Oxidationseinheit hindurch sichergestellt bzw. beeinflusst werden, beispielsweise durch einen im Wesentlichen nach der Pyrolyseeinheit 1 angeordneten Zerkleinerer.

Der aus der Pyrolyseeinheit 1 austretende und/oder der in die Oxidationseinheit eingebrachte Vollstrom weist feste, flüssige und gasförmige Bestandteile auf.

In der Oxidationseinheit 2 wird ein Vergasungsmittel in den Vollstrom eingebracht. Vorzugsweise wird das Vergasungsmittel mittels mindestens einer Düseneinheit 7, 8 in den Vollstrom eingebracht. Eine Düseneinheit 7, 8 ist vorzugsweise so an der Oxidationseinheit 2 angeordnet, dass durch das Einbringen des Vergasungsmittels das Material im Wesentlichen von einem Materialeingang der Oxidationseinheit 2 durch eine Oxidationszone zu einer Materialausgangsöffnung transportiert wird. Vorzugsweise wird das Material durch die Geschwindigkeit, den Druck und/oder die Richtung des eingebrachten Vergasungsmittels und/oder durch eine Volumenzunahme des Vergasungsmittels, die mit der Oxidation einhergeht, transportiert. Das eingebrachte Vergasungsmittel expandiert vorzugsweise zumindest einen Teil des Vollstroms, wodurch ein Druck entsteht. Vorzugsweise expandiert das Vergasungsmittel alleine den Vollstrom nur teilweise und zusätzlich expandiert die Gasfraktion des Vollstromes durch die Temperaturerhöhung aufgrund der vorzugsweise exotherm ablaufenden Redoxreaktionen der Oxidationseinheit. Die Oxidation bedingt insbesondere eine Temperatur- und Geschwindigkeitserhöhung des Gases.

Der Vorteil eines derartigen pneumatischen Transports des Vollstroms liegt insbesondere zum einen darin, dass auch Vollströme mit größeren Partikeln transportiert werden können. Im Gegensatz dazu ist bei einer Fallstromoxidation meist notwendig, den zu oxidierenden Gasstrom vorzureinigen, sodass in dem zu oxidierenden Strom nur noch feinste Partikel vorhanden sind. Aufgrund des pneumatischen Transports ist es somit möglich, dass der in der Pyrolyseeinheit erzeugte Vollstrom im wesentlichen direkt, d.h. ohne weitere Aufarbeitung wie Trennung bzw. Filterung oder Teilung, der Oxidationseinheit zugeführt werden kann.

Zudem kann der zumindest teilweise oxidierte Vollstrom direkt, d.h. ohne Abtrennung von Partikeln oder Teilung, einer Reduktionseinheit zugeführt werden. Mit anderen Worten, mit einer Pyrolyseeinheit, Oxidationseinheit und anschließenden Reduktionseinheit kann ein Vollstrom, der in der Pyrolyseeinheit produziert wird und auch größere Partikel aufweisen kann, direkt ohne Vorbehandlung, Teilung oder Trennung von bestimmten Partikeln verarbeitet werden wodurch das System effizient und kostengünstig arbeitet.

Vorzugsweise erfolgt der Transport des Materials bzw. des Materialstroms oder des Vollstroms durch die Geschwindigkeit und optional das Volumen des eingebrachten Vergasungsmittels, bzw. wird dadurch unterstützt. Weiterhin vorzugsweise, wird der Transport des Materials durch die Oxidationseinheit durch eine spezielle Ausgestaltung der Strömungsquerschnittflächen der Vorrichtung unterstützt. Vorzugsweise weist der Strömungsquerschnitt im Bereich vor der Oxidationseinheit 2 eine erste Größe auf, die größer oder gleich der Größe des Strömungsquerschnitts der Oxidationseinheit ist. Vorzugsweise sind die Oxidationseinheit und/oder die Zuführung zur Oxidationseinheit in etwa rohrförmig ausgebildet. Vorzugsweise weist die Zuführung zur Oxidationseinheit einen Durchmesser von etwa 10cm bis 60cm, vorzugsweise von etwa 30cm und die Oxidationseinheit einen Durchmesser von etwa 5cm bis 30cm, vorzugsweise von etwa 20cm auf. Die Größen und Größenverhältnisse sind vorzugsweise insbesondere abhängig von der Leistung der Vorrichtung.

Die Ausrichtung der Oxidationseinheit bzw. deren Transportachse ist vorzugsweise in etwa horizontal, weiterhin vorzugsweise in einem Bereich von etwa +60° bis -60° zur Horizontalen. Das in die Oxidationseinheit eingebrachte Material weist vorzugsweise eine Strömungsrichtung auf, die in einem spitzen Winkel zur Strömungsrichtung des Materials in der Oxidationseinheit ausgerichtet ist und vorzugsweise in einem Winkel von etwa 10° bis 100° zur Strömungsrichtung bzw. Transportachse des Materials in der Oxidationseinheit ausgerichtet ist. Die winklige Ausrichtung der Bereiche zueinander und/oder das Strömungsquerschnittsverhältnis vor der zu in der Oxidationseinheit 2 resultiert vorzugsweise in einer Sogwirkung, die den Transport des Materials entlang der Oxidationseinheit 2 unterstützt.

Die Vermischung beider Ströme, insbesondere des Pyrolyse Vollstroms und des Vergasungsmittelstroms, und insbesondere zusammen mit einer Strömungsquerschnittreduktion in der Oxidationszone stellt vorzugsweise den Transport des Materials, insbesondere durch die bzw. entlang der Oxidationseinheit sicher.

Vorzugsweise wird der Materialtransport ferner durch die Verbrennung und die Temperaturerhöhung unterstützt.

Die Oxidationseinheit 2 ist dabei so ausgestaltet, dass durch den Druck und/oder die weiteren genannten Mechanismen das Material in Richtung der Materialausgangsöffnung transportiert wird. Vorzugsweise vergrößert und/ oder verkleinert sich zumindest teilweise der Strömungsquerschnitt der Oxidationseinheit 2 in Materialtransportrichtung, d.h. in Richtung des Materialausgangs. Alternativ ist dieser Strömungsquerschnitt vorzugsweise konstant oder im Eingangsbereich des Vollstroms aus der Pyrolyse als Venturidüse ausgeführt.

Wie in Fig. 1 wiedergegeben ist mindestens eine Düseneinheit 7, die eine oder mehrere Düsen zum Einbringen von Vergasungsmittel aufweist, außerhalb des Volumenstromwegs angeordnet. Vorzugsweise ist eine Düseneinheit 7 im Bereich einer Richtungsänderung des Volumenstromwegs oder im unteren Teil der Reduktionszone angeordnet. Wie in der in Fig. 1 dargestellten bevorzugten Anordnung erfährt der Volumenstrom beim Eintritt in die Oxidationseinheit 2 vorzugsweise eine Richtungsänderung von etwa 20° bis 160°, vorzugsweise etwa 20° bis 70°, etwa 45° bis 135° und ebenfalls bevorzugt von etwa 90° oder etwa 45°. Besonders bevorzugt erfolgt die Richtungsänderung in einem spitzen Winkel zur Transportachse der Oxidationseinheit 2 in Strömungsrichtung, so dass keine schlagartige Richtungsänderung des Stroms erfolgt. Hierbei ist eine Düseneinheit vorzugsweise außerhalb des Volumenstroms und in Ausrichtung mit dem Weg des Volumenstroms in der Oxidationseinheit, vorzugsweise rückwärtig bzw. hinter dem Weg und/oder außerhalb des Wegs des Volumenstroms in der Oxidationseinheit angeordnet. Dort ist vorzugsweise auch die Aufheiz- bzw. Zündeinrichtung angeordnet.

Vorzugsweise wird an mehreren Positionen entlang der Oxidationseinheit 2 Vergasungsmittel eingebracht. Insbesondere durch diese mehrstufige Oxidation kann der Vollstromvergaser feste Vollstrombestandteile verschiedener Größen verarbeiten. Vorzugsweise werden auch flüssige Vollstrombestandteile, wie zum Beispiel Teere, im Wesentlichen vollständig oxidiert oder durch die in der Oxidationseinheit herrschenden hohen Temperaturen zersetzt bzw. gecrackt.

Die Ausbildung der Oxidationseinheit und insbesondere die Einbringung von Vergasungs- bzw. Oxidationsmittel in den Vollstrom, insbesondere an mehreren Stellen entlang der Oxidationseinheit, bedingt das Vorliegen einer hohen, turbulenten Strömung, was wiederum zu einer guten Durchmischung des Vollstroms und damit zu einer verbesserten Oxidation führt.

Besonders bevorzugt kann, insbesondere bei einer mehrstufigen Oxidation, die Geschwindigkeit des Vollstroms gesteuert bzw. geregelt werden, wodurch sich unter anderem der Synthesegas bzw. Schwachgas aufweisende Strom aus der Oxidationseinheit 2 kontrollieren lässt. Insbesondere wird somit der pneumatische Transport bei verschiedenen Betriebszuständen sichergestellt.

Vor und/oder an dem Materialausgang der Oxidationseinheit 2 ist vorzugsweise eine Düseneinheit 8 zum Einbringen von Vergasungsmittel in den Vollstrom angeordnet. Dadurch können im Vollstrom noch enthaltene flüssige und/oder feste Stoffe oxidiert werden. Vorzugsweise entspricht die mindestens eine Düseneinheit 8 im Wesentlichen der oben beschriebenen Düseneinheit 7. Die Düseneinheit 8 kann radial um die Oxidationszone in einem Winkel von -45° bis +45° vorzugsweise aber 0°zum Radius, und axial zur Strömungsrichtung in einem Winkel von -45° bis +85°, vorzugsweise aber von 0-+60°, und vorzugsweise insbesondere von 45°, zum Strömungsverlauf, angeordnet sein. Beispielsweise kann die Durchmischung durch mehrere Eindüsungen, beispielsweise 2-12 Eindüsungen, insbesondere 6 Eindüsungen, also um den Umfang der Oxidationseinheit bzw. um die Transportachse angeordnete Düsen verbessert werden, die Gas entlang einer die Transportachse nicht schneidenden Achse, bspw. entlang einer Tangentialrichtung, einbringen.

Vorzugsweise erlaubt die Düseneinheit 7, 8 alternativ oder zusätzlich eine Steuerung und/oder Regelung des Vollstroms. Vorzugsweise erlaubt sie insbesondere eine Leistungsregelung bei verschiedenen Betriebszuständen und/oder eine Stabilisierung des Betts in der Reduktionseinheit 3.

Der Materialausgang der Oxidationseinheit 2 ist mit einer Reduktionseinheit 3 verbunden, so dass aus der Oxidationseinheit 2 austretendes Material in die Reduktionseinheit 3 gelangt. Die Reduktionseinheit 3 ist stehend angeordnet, so dass der Materialfluss durch die Reduktionseinheit 3 im Wesentlichen senkrecht und vorzugsweise entgegen der Gravitationskraft erfolgt. Der Materialfluss wird dabei durch die Oxidationseinheit 2 bzw. durch die Düseneinheiten 7, 8 so gesteuert, dass sich in der Reduktionseinheit 3 eine schwebende Reduktionszone, nämlich ein in Schwebe gehaltenes Bett, insbesondere ohne zusätzliches Bett- oder Stützmaterial, ausbildet. Dies wird vorzugsweise durch die Geometrie der Reduktionseinheit und insbesondere ihre trompetenförmige Aufweitung in Strömungsrichtung unterstützt oder bedingt. In der Reduktionszone werden im Wesentlichen verbleibende Kohlenstoffe mit dem aus der Oxidationseinheit 2 austretenden teerarmen Gas reduziert.

Durch die stehende Anordnung der Reduktionseinheit 3 werden nicht gasförmige Bestandteile im Materialstrom durch die Schwerkraft zurückgehalten, und verbleiben vorzugsweise schwebend in der Reduktionseinheit, vorzugsweise bis sie zu Gas reduziert wurden.

Zudem bewirkt die im wesentlichen senkrechte Anordnung der Reduktionseinheit, dass auf den Materialstrom bzw. den zumindest partiell oxidierten Vollstrom mindestens zwei im wesentlichen entgegenstehenden Kräfte wirken, wodurch vorzugsweise eine Auflockerung des (schwebenden) Materialbetts erreicht wird. Zum einen bewirkt die Gravitation, dass die im Vollstrom bzw. Gasstrom vorhandenen Teilchen in der Reduktionseinheit eine nach unten gerichtete Kraft erfahren, bzw. nach unten gezogen werden. Anderseits bewirkt der nach oben gerichtete Gasstrom, dass die Teilchen eine nach oben gerichtete Kraft erfahren bzw. nach oben geführt werden. Schließlich bildet sich basierend auf diesen im Wesentlichen entgegengesetzten Kräften ein schwebendes Materialbett aus, das aufgelockert wird. Bei typischen Festbettvergasern aus dem Stand der Technik sind der Gasstrom und die Gravitationskräfte häufig gleichgerichtet, sodass sich das Materialbett verfestigt. Zudem liegt das Festbett im Stand der Technik auf bspw. einem Gitter auf, schwebt also nicht.

Die Reduktionseinheit weist vorzugsweise mindestens einen Ausgang zum Abführen des erzeugten brennbaren Gases (Synthesegas) auf, der im folgenden auch als Ausgang bzw. Gas-Ausgang bezeichnet wird. Zudem kann die Reduktionseinheit mindesten einen weiteren Ausgang zum Abführen von Restmaterial aufweisen, der im Folgenden auch als Materialausgang bezeichnet wird. Am Gas-Ausgang 31 der Reduktionseinheit 3 weist der Materialstrom hauptsächlich bspw. Synthesegas auf, das nach optionalen Schritten wie Abkühlung, beispielsweise in einem Wärmetauscher, und/oder Reinigung, einem Gasspeicher bzw. einer Verbrennungsmaschine und/oder einer anderen Verwertungsform zugeführt werden kann. Die durch die Abkühlung gewonnene Energie wird besonders bevorzugt innerhalb des Systems rückgeführt. So kann beispielsweise eine Trocknung von zu vergasendem Material bzw. Biomasse ohne externe Energiezufuhr bewerkstelligt werden.

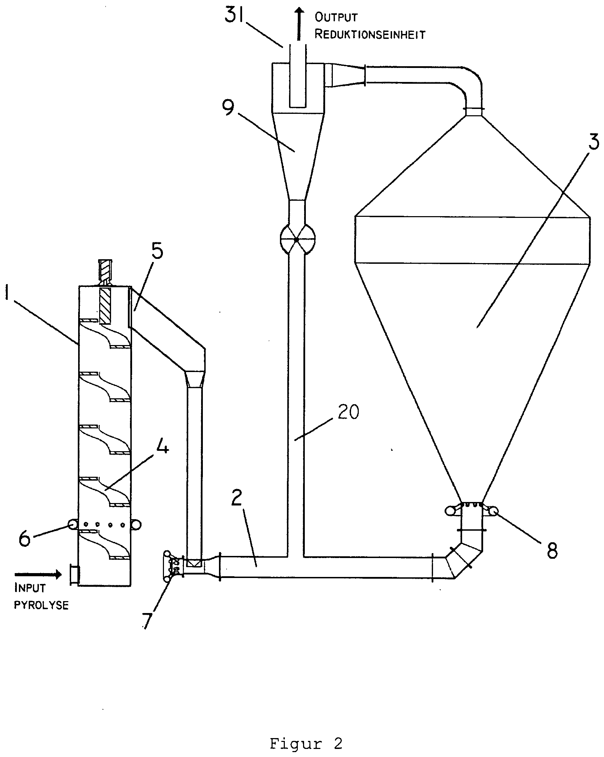

Figur 2 zeigt eine bevorzugte Ausführungsform mit einer Feststoffrückführung 9. Die Feststoffrückführung 9 ist zwischen dem Ausgang der Reduktionseinheit 3 und der Oxidationseinheit 2 angeordnet. So können möglicherweise im Materialstrom enthaltene bzw. unter Umständen übrig gebliebne feste und/oder flüssige Bestandteile, die die Reduktionseinheit 3 durch den Gas-Ausgang 31 verlassen, in die Oxidationseinheit 2 zurückgeführt werden. Durch diese Maßnahme wird sichergestellt, dass im Wesentlichen keine festen und/oder flüssigen Bestandteile im Synthesegas verbleiben. Dadurch können die rückgeführten Bestandteile zumindest teilweise in Gas umgewandelt werden, was eine höhere Effizienz zur Folge hat. Weiter wird durch diese Maßnahme die Reinheit bzw. Qualität des Synthesegases bzw. Schwachgases nach der Feststoffrückführungseinheit 9 verbessert. Vorzugsweise weist das den Gas-Ausgang 31 verlassende Gas, bspw. Synthesegas bzw. Schwachgas, jedoch bereits eine hohe Reinheit auf und enthält vorzugsweise keine oder nur sehr geringe Mengen an Feststoffen oder Flüssigkeiten.

Das rückgeführte Material wird vorzugsweise an einer Position in die Oxidationseinheit 2 eingebracht, die in Vollstromrichtung hinter dem Materialeingang liegt, an dem Material aus der Pyrolyseeinheit 1 in die Oxidationseinheit 2 eingebracht wird. Vorzugsweise wird das rückgeführte Material in Strömungsrichtung eingebracht, vorzugsweise in einem spitzen Winkel zur Transportachse des Vollstroms in der Oxidationseinheit 2. Die Einbringung erfolgt alternativ vorzugsweise auch in dem Bereich zwischen Pyrolyseeinheit 1 und Oxidationseinheit 2, bspw. in das in Fig. 2 dargestellte Fallrohr 20 zwischen den Einheiten 1 und 2.

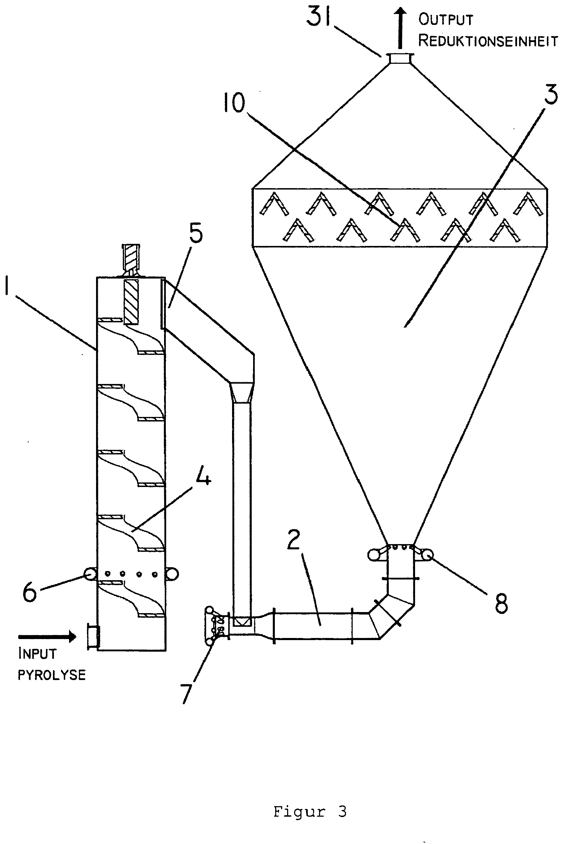

Figur 3 zeigt einen Vollstromvergaser mit einer bevorzugten Reduktionseinheit 3, die eine Rückhalteeinheit 10 aufweist. Die Rückhalteeinheit 10 dient insbesondere dazu, feste und flüssige Bestandteile des Materialstroms zurückzuhalten. Die Rückhalteeinheit 10 ist vorzugsweise so konstruiert, dass sie eine stabilisierende Wirkung auf die Reduktionszone bzw. das in Schwebe gehaltene Bett in der Reduktionseinheit 3 hat. Somit wird die Reduktionszone in ihren Eigenschaften einstellbar und vorzugsweise folglich die Reduktion der aus der Oxidationseinheit 2 in die Reduktionseinheit 3 transportierten Materialien verbessert. Vorzugsweise ist die Rückhalteeinheit 10 justierbar, so dass der Strömungswiderstand des Materialflusses durch die Reduktionseinheit 3 veränderbar bzw. optimierbar ist.

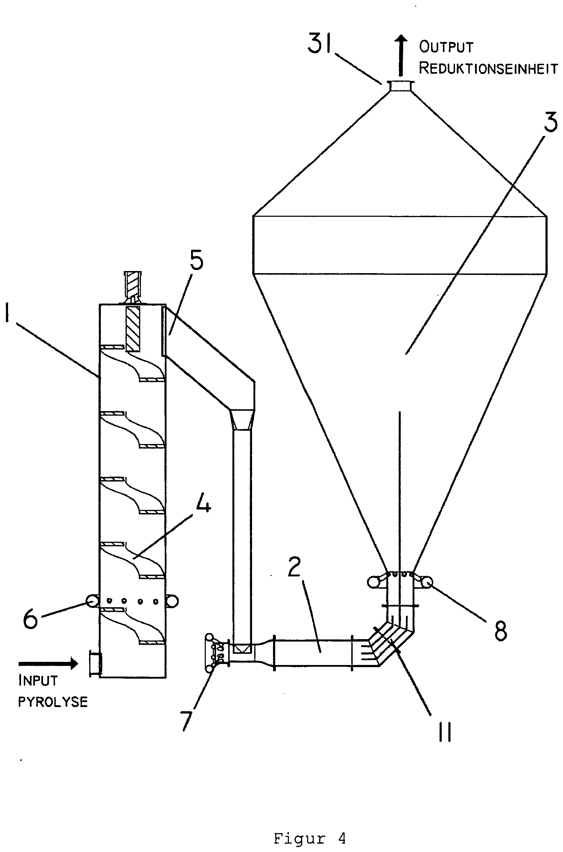

Figur 4 zeigt einen Vollstromvergaser mit einer bevorzugten Oxidationseinheit 2, die eine Stabilisierungseinheit 11 aufweist. Die Stabilisierungseinheit 11 ist ausgebildet, insbesondere Verwirbelungen des Vollstroms beim Transport durch die Oxidationseinheit 2 zu vermeiden. Die Stabilisierungseinheit 11 wird vorzugsweise zumindest Stellenweise entlang der Oxidationseinheit, bspw. in Kurven bzw. Biegungen der Oxidationseinheit angeordnet. Ein Teil der in Figur 3 gezeigten Stabilisierungseinheit erstreckt sich vorzugsweise bis in die Reduktionseinheit 3.

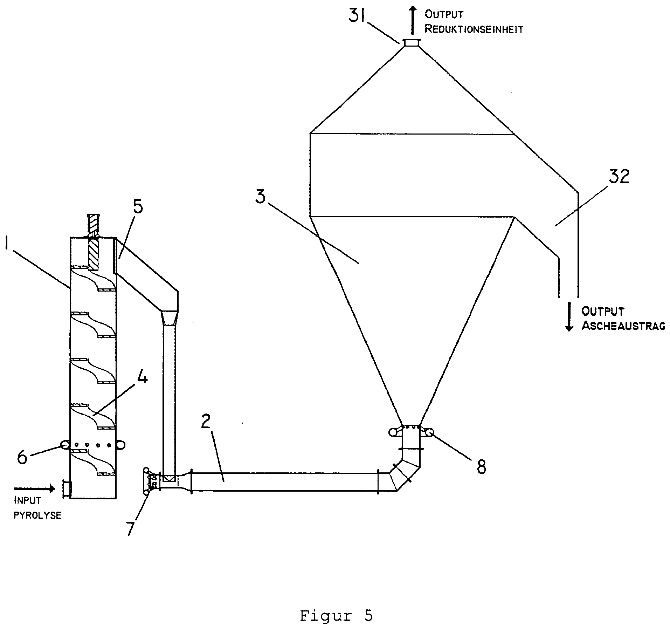

Figur 5 zeigt einen Vollstromvergaser mit einer Austragseinheit bzw. einem Überlauf 32. Die Austragseinheit ist an der Reduktionseinheit vorzugsweise so angebracht, dass Materialien vor dem Gasausgang aus über die Austrageinheit bzw. den Überlauf aus der Reduktionseinheit entfernt werden können. Vorzugsweise ist die Austragseinheit, zumindest Stellenweise, um die Reduktionseinheit herum, vorzugsweise ringförmig, angebracht. Die Austragseinheit bzw. der Überlauf dient zur Entfernung von ungewünschten Materialien, wie Asche oder Fremdkörpern, aus dem Vollstromvergaser welche nur bedingt bzw. nicht ausreichend, oder nicht in ausreichend kurzer Zeit reduziert und somit in ihre Gasform übergeführt werden können. Diese unerwünschten Materialien werden vorzugsweise ab einer vorgegebenen bzw. einstellbaren Füllhöhe des Schwebebetts gravimetrisch, und/oder über ein mechanisches System 33 in die Austragseinheit ausgetragen (Überlauf). Die Austragseinheit mündet in ein gasdichtes Austragsorgan, vorzugsweise in eine Klappen- oder Zellradschleuse. Die ausgetragenen festen, flüssigen und/oder gasförmigen Bestandteile können in das System rückgeführt oder vorzugsweise ausgeschleust oder teilweise rückgeführt und ausgeschleust werden.

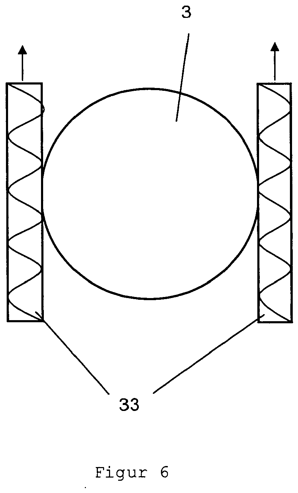

Figur 6 zeigt eine Draufsicht einer bevorzugten Reduktionseinheit mit einem mechanischen System 33 zum Abführen von unerwünschten Materialen, wie Asche und/oder Fremdkörpern, insbesondere gemäß der bevorzugten Ausführungsform nach Fig. 5. In dieser beispielhaften Ausführungsform sind seitlich von der Reduktionseinheit 3 zwei Transportschnecken 33 angebracht, die unerwünschte Materialen von der Reduktionseinheit, vorzugsweise vom Schwebebett weg transportieren. Beispielsweise können die Transportschnecken in einer Höhe angebracht sein, dass der obere Rand des aufgebauten Schwebebetts ab einer gewissen, vorzugsweise einstellbaren, Höhe desselben stets abgetragen wird und durch die Austragseinheit so die Position des oberen Randes des Schwebebetts definiert werden kann. Derartige Austragseinheiten sind besonders vorteilhaft bei der Verwendung von Rohstoffen bzw. Biomasse, die viel Asche produzieren, beispielsweise Klärschlämme. So spielt eine Austragseinheit bei der Verwendung des Rohstoffs Holz vorzugsweise eine untergeordnete Rolle. Insbesondere wird bei der Verarbeitung von Holz die Asche vorzugsweise mit dem Gasstrom ausgetragen.

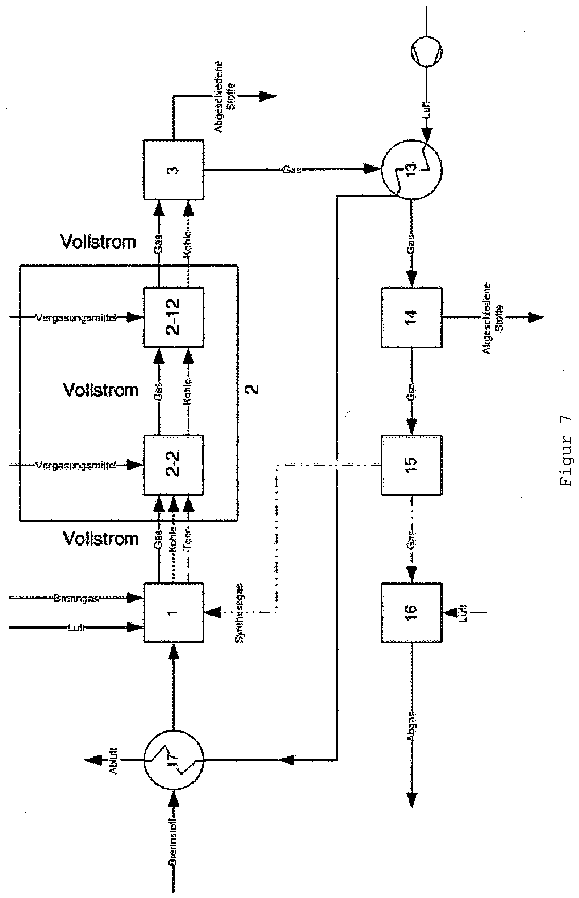

Figur 7 zeigt ein Flussdiagramm eines bevorzugten erfindungsgemäßen Verfahrens. Vorzugsweise wird ein Rohstoff bzw. Brennstoff in einem Trocknungsschritt 17 von eventuell vorhandener Feuchtigkeit befreit. Vorzugsweise wird ein übermäßiger Wassergehalt entfernt, der sich im Pyrolyseschritt aufgrund der Verdampfungsenergie als energetisch problematisch erweisen kann. Insbesondere ist die Pyrolyse bereits endotherm, so dass bei zuviel Wassergehalt noch mehr Energie der Pyrolyse zugeführt werden muß, was zu Effizienzverlusten führt. Die Energie dafür wird vorzugsweise, wie weiter oben bereits beschrieben, von späteren Prozessschritten rückgeführt.

Der Brennstoff wird nach der Trocknung der Pyrolyseeinheit 1 zugeführt. Aus dem Brennstoff entstehen in der Pyrolyseeinheit 1 durch das Einbringen von Wärme, beispielsweise von heißen Abgasen aus einem Brenner oder Motor, insbesondere feste, flüssige und/oder gasförmige Bestandteile, vorzugsweise die Bestandteile Gas, Kohle und Teer, die zusammen den Vollstrom bilden . Weiterhin vorzugsweise erfolgt die Vergasung autotherm, also ohne äußere Energiezufuhr. Anstatt der Eindüsung von heißen Gasen erfolgt bei der autothermen Pyrolyse eine Einbringung einer definierten Menge von Oxidationsmittel, vorzugsweise Luft bzw. Sauerstoff. Bei einem gewissen Anteil des zu pyrolysierenden Gutes erfolgt somit eine Verbrennungsreaktion aus welcher die nötige Wärme für die Pyrolyse des Restmaterials bezogen wird.

Nach der Pyrolyse wird der Vollstrom, vorzugsweise vollständig bzw. ungeteilt, der Oxidationseinheit 2 zugeführt. Durch das Einbringen eines Oxidationsmittels bzw. Vergasungsmittels werden Bestandteile des Vollstroms, insbesondere das in der Pyrolyse erzeugte teerhaltige Gas und der verbleibende Kohlenstoff, zumindest partiell oxidiert. Durch das Einbringen des Oxidationsmittels und/oder durch die bei der Oxidation entstehende Volumenexpansion zumindest eines Teils des Vollstroms, wird der Vollstrom von der Materialeingangsöffnung zur Materialausgangsöffnung der Oxidationseinheit 1 transportiert. Vorzugsweise wird an mindestens zwei verschiedenen Positionen 2-2, 2-12 der Oxidationseinheit 2 Oxidationsmittel in den Vollstrom eingebracht, i.a. wie bereits beschrieben. Dadurch kann der Transport, insbesondere die Geschwindigkeit des Vollstroms, die Leistung und/oder das Bett gesteuert werden. Vorzugsweise erfolgt eine Regelung durch eine Volumenstromerfassung, bspw. durch das Vorsehen von entsprechenden Sensoren, bspw. im Vollstrom, vorzugsweise am Materialausgang der Oxidationseinheit und/oder in der Reduktionseinheit, vorzugsweise am Ausgang der Reduktionseinheit, und einer entsprechenden Ansteuerung des Einbringens des Oxidationsmittels auf Basis der von dem/den Sensor(en) aufgenommenen Information.

Der Vollstrom wird von der Oxidationseinheit 2 in die Reduktionseinheit 3 transportiert. Der Vollstrom weist nach der Oxidation vorzugsweise im Wesentlichen keine Teere auf, da diese vorzugsweise bereits in der Oxidationseinheit oxidieren. Die Reduktionseinheit 3 reduziert im Wesentlichen teerarmes Gas mit Kohlenstoff.

Das heiße, die Reduktionseinheit verlassende, Gas, das Temperaturen von ca. 500 °C bis 900 °C hat, wird vorzugsweise in einem Wärmetauscher 13 abgekühlt, wobei die Wärme vorzugsweise bei der Trocknung des Brennstoffs im Wärmetauscher 17 verwendet wird.

In einer folgenden Gasreinigung 14 werden im Gas verbliebene Verunreinigungen, wie beispielsweise Staub, entfernt. Nach der optionalen Reinigung wird das Synthesegas bspw. einem Gasspeicher 15 bzw. einer Verbrennungsmaschine und/oder anderen Verwertungseinheit 16 zugeführt.

## Patentansprüche

1. Verfahren zum Oxidieren und anschließenden Reduzieren eines zumindest partiell oxidierten Vollstroms, mit den Schritten:
Bereitstellen einer Oxidationseinheit (2) und Einbringen eines Vergasungsmittels zur zumindest partiellen Oxidation eines festes, flüssiges und gasförmiges Material aufweisenden Völlstroms, derart, dass der
Vollstrom zu einem Materialausgang der Oxidationseinheit (2) pneumatisch transportiert wird,
Bereitstellen einer im Wesentlichen senkrecht angeordneten Reduktionseinheit (3), wobei der Materialausgang der Oxidationseinheit (2) mit der
Reduktionseinheit (3) verbunden ist, sodass das Material aus der Oxidationseinheit (2) in die Reduktionseinheit (3) gelangt, wobei die Reduktionseinheit einen sich zur Ausgangsöffnung der Oxidationseinheit (2) hin verjüngenden Querschnitt aufweist,
wobei die Strömungsgeschwindigkeit des Vollstroms in der Reduktionseinheit (3) an das Material des Vollstroms und an die Form des Strömungsquerschnitts der Reduktionseinheit so angepasst ist, dass sich ein stabiles in Schwebe gehaltenes Bett in der Reduktionseinheit (3) ausbildet.

2. Verfahren nach Anspruch 1, wobei Transportschnecken in einer Höhe angebracht sind, dass ein oberer Rand des in Schwebe gehaltenen Betts ab einer gewissen, vorzugsweise einstellbaren, Höhe desselben stets abgetragen wird, wodurch die Position des oberen Randes des in Schwebe gehaltrenen Bettes definiert werden kann.

3. Verfahren nach einem der vorhergehenden Ansprüche, wobei das stabile in Schwebe gehaltene Bett ohne Verwendung von mechanischen Einbauten, wie Roste und/oder zusätzliches Bettmaterial wie Quarzsand, in der Reduktionseinheit (3) vorliegt.

4. Verfahren nach einem der vorhergehenden Ansprüche, wobei sich der Strömungsquerschnitt zum Ausgang der Reduktionseinheit (3) hin ständig vergrößert, vorzugsweise trompetenförmig.

5. Verfahren nach einem der vorhergehenden Ansprüche, wobei die Steigung einer Innenwand an einem Eingangsende der Reduktionseinheit (3) verschieden von der Steigung der Innenwand an einem Ausgangsende der Reduktionseinheit (3) ist, wobei vorzugsweise die Innenwand am Eingangsende eine größere Steigung aufweist als am Ausgangsende.

6. Verfahren nach einem der vorhergehenden Ansprüche, wobei sich eine Steigung der Innenwände von einem Eingangsende zu einem Ausgangsende kontinuierlich und/oder diskontinuierlich verändert.

7. Verfahren nach einem der vorhergehenden Ansprüche, wobei die Reduktionseinheit (3) einen Überlauf (32) für den Austrag von festen, flüssigen oder gasförmigen Stoffen aufweist.

8. Verfahren nach Anspruch 7, wobei der Überlauf (32) um die Reduktionseinheit (3) herum angebracht ist, und zumindest eine nach unten hin geführte Austragsleitung aufweist, wobei ein Materialaustrag gravimetrisch erfolgt.

9. Verfahren nach Anspruch 7 oder 8, wobei der Überlauf (32) vorzugsweise ein mechanisches Austragssystem (33) aufweist.

## Claims

1. A process for oxidizing and subsequently reducing an at least partially oxidized full stream, comprising the steps of:
providing an oxidation unit (2) and introducing a gasification agent for at least partially oxidizing a full stream comprising solid, liquid and gaseous materials such that the full stream is pneumatically transported to a material outlet of the oxidation unit (2),
providing a substantially vertically arranged reduction unit (3), wherein the material outlet of the oxidation unit (2) is connected to the reduction unit (3) so that the material from the oxidation unit (2) ends up in the reduction unit (3), wherein the reduction unit has a cross-section tapering towards the outlet port of the oxidation unit (2),
wherein the flow rate of the full stream in the reduction unit (3) is adapted to the material of the full stream and to the shape of the flow cross-section of the reduction unit so that a stable bed held in suspension is formed in the reduction unit (3).

2. The process according to claim 1, wherein conveyor screws are located at a level that an upper edge of the bed held in suspension will always be removed starting from a specific, preferably adjustable, level thereof, whereby the position of the upper edge of the bed held in suspension can be defined.

3. The process according to any one of the preceding claims, wherein the stable bed held in suspension is present in the reduction unit (3) without the use of any mechanical fixtures such as grates and/or additional bed material such as silica sand.

4. The process according to any one of the preceding claims, wherein the flow cross-section continuously increases towards the outlet of the reduction unit (3), preferably in a trumpet-shaped way.

5. The process according to any one of the preceding claims, wherein the slope of an inner wall at an inlet end of the reduction unit (3) differs from the slope of the inner wall at an outlet end of the reduction unit (3), wherein the inner wall preferably has a larger slope at the inlet end than at the outlet end.

6. The process according to any one of the preceding claims, wherein a slope of the inner walls changes continuously and/or discontinuously from an inlet end to an outlet end.

7. The process according to any one of the preceding claims, wherein the reduction unit (3) comprises an overflow (32) for discharging solid, liquid or gaseous substances.

8. The process according to claim 7, wherein the overflow (32) is arranged around the reduction unit (3), and has at least one downward leading discharge pipe, with the material being discharged gravimetrically.

9. The process according to claim 7 or 8, wherein the overflow (32) preferably comprises a mechanical discharge system (33).

## Revendications

1. Procédé d'oxydation et de réduction consécutive d'un plein courant au moins partiellement oxydé, comprenant l'étape de :
préparation d'une unité d'oxydation (2) et application d'un agent de gazéification pour l'oxydation au moins partielle d'un plein courant comprenant une matière solide, liquide et gazeuse, de sorte que le plein courant soit refoulé pneumatiquement vers une sortie de matière de l'unité d'oxydation (2),
préparation d'une unité de réduction (3) sensiblement verticale, la sortie de matière de l'unité d'oxydation (2) étant reliée à l'unité de réduction (3), si bien que la matière en provenance de l'unité d'oxydation (2) parvient dans l'unité de réduction (3), l'unité de réduction ayant une section transversale se rétrécissant vers l'ouverture de sortie de l'unité d'oxydation (2),
la vitesse d'écoulement du plein courant vers l'unité de réduction (3) étant ajustée à la matière du plein courant et à la forme de la section d'écoulement de l'unité de réduction, de manière à former un lit stable maintenu en suspension dans l'unité de réduction (3).

2. Procédé selon la revendication 1, où des vis de transport sont montées à une hauteur où un bord supérieur du lit maintenu en suspension est toujours enlevé à partir d'une certaine hauteur, de préférence réglable, de celui-ci, la position du bord supérieur du lit maintenu en suspension pouvant être définie.

3. Procédé selon l'une des revendications précédentes, où le lit stable maintenu en suspension est présenté dans l'unité de réduction (3) sans recourir à des éléments mécaniques, tels que grilles et/ou matériau de lit additionnel tel que sable siliceux.

4. Procédé selon l'une des revendications précédentes, où la section d'écoulement s'élargit constamment vers la sortie de l'unité de réduction (3), de préférence en forme de trompette.

5. Procédé selon l'une des revendications précédentes, où l'inclinaison d'une paroi intérieure à une extrémité d'entrée de l'unité de réduction (3) est différente de l'inclinaison de la paroi intérieure à une extrémité de sortie de l'unité de réduction (3), l'inclinaison de la paroi intérieure à l'extrémité d'entrée étant préférentiellement supérieure à celle à l'extrémité de sortie.

6. Procédé selon l'une des revendications précédentes, où l'inclinaison des parois intérieures d'une extrémité d'entrée vers une extrémité de sortie varie de manière continue et/ou discontinue.

7. Procédé selon l'une des revendications précédentes, où l'unité de réduction (3) comporte un déversoir (32) pour l'évacuation de substances solides, liquides ou gazeuses.

8. Procédé selon la revendication 7, où le déversoir (32) est disposé tout autour de l'unité de réduction (3), et comporte au moins une conduite d'évacuation guidée vers le bas, une évacuation de matière étant effectuée par gravité.

9. Procédé selon la revendication 7 ou la revendication 8, où le déversoir (32) présente préférentiellement un système d'évacuation mécanique (33).
